(19)

**Europäisches Patentamt**

**European Patent Office**

**Office européen des brevets**

(11) **EP 4 610 376 A1**

(12) **EUROPEAN PATENT APPLICATION**

(43) Date of publication:
**03.09.2025 Bulletin 2025/36**

(21) Application number: **24160153.3**

(22) Date of filing: **28.02.2024**

(51) International Patent Classification (IPC):
*C22C 29/08* (2006.01)  *B22F 1/105* (2022.01)
*B22F 10/14* (2021.01)  *B33Y 10/00* (2015.01)
*B33Y 70/10* (2020.01)  *C22C 1/051* (2023.01)
*C22C 29/06* (2006.01)  *B22F 5/00* (2006.01)
*B33Y 80/00* (2015.01)  *C22C 1/053* (2023.01)

(52) Cooperative Patent Classification (CPC):
**C22C 29/06; B22F 1/105; B22F 10/14; B33Y 10/00;
B33Y 70/10; C22C 1/051; C22C 29/08;**
B22F 2005/001; B33Y 80/00; C22C 1/053

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **AB Sandvik Coromant
811 81 Sandviken (SE)**

(72) Inventors:
• **Norgren, Susanne
811 81 Sandviken (SE)**
• **Boström, Magnus
811 81 Sandviken (SE)**
• **Gyllenflykt, Tobias
811 81 Sandviken (SE)**

(74) Representative: **Sandvik
Sandvik Intellectual Property AB
811 81 Sandviken (SE)**

(54) **METHOD OF MAKING A CEMENTED CARBIDE BODY BY 3D PRINTING**

(57) The present invention relates to a method making a cemented carbide body where the method comprises providing a ready-to-print cemented carbide powder and a liquid binder comprising a tungsten containing salt. A body is 3D printed from the ready-to-print cemented carbide powder and the liquid binder, thereby forming a green body where the green body is cured and subsequently sintered to form a cemented carbide body. The method makes it possible to control the carbon content in the final cemented carbide body by adjusting the amount of tungsten containing salt in the liquid binder.

**EP 4 610 376 A1**

## Description

The invention relates to a method of making a cemented carbide body by 3D printing where a tungsten containing salt is added during printing to control the carbon balance in the cemented carbide.

Background

Cemented carbide has been known for more than a hundred years, and usually contain a tungsten carbide phase and a metal binder phase. Conventionally, cemented carbides are made by mixing the required powders, forming a green body by pressing and then sinter the green body.

The dimensions of the cemented carbide body are limited due to the pressing step, although the cemented carbide body can be grinded into its final shape after sintering, that is expensive.

Due to this limitation, forming cemented carbide bodies using additive manufacturing is an attractive method since the desired shape of the cemented carbide body is achieved with a minimum of grinding.

However, additive manufacturing of cemented carbides has other limitations. For example, the lower limit of the amount of metal binder in the cemented carbide made by additive manufacturing is considerably higher than for conventional manufacturing. This is due to several things, one is a reduced sintering activity, another is difficulty to control the carbon balance.

When manufacturing cemented carbides, irrespectively of manufacturing method, the overall carbon content needs to be controlled. If the total carbon content is too low, eta phase is formed and, if the total carbon content is too high, free graphite is formed. Both eta phase and graphite are usually, but not always, considered to be something to avoid for several reasons. During conventional manufacturing, the final composition of the powder blend is achieved by taking out a sample, pressing and sintering it and analyzing the sample to subsequently adjusting the total carbon to tungsten ratio by adding C or W to the powder blend before drying, pressing and sintering. When it comes to 3D printing, the carbon content is given by the ingoing, already sintered, cemented carbide powder, which gives no possibility to further adjust the carbon content except for adjusting the sintering atmosphere, e.g. using carburizing or decarburizing conditions. However, these methods most often create gradients within the sintered body since they are active from the component surface.

One object of the present invention is to provide a method making it possible to adjust the carbon content when making cemented carbide by 3D printing.

Definitions

The term "cemented carbide" is herein intended to be a material comprising hard constituents embedded in a metallic binder phase, wherein at least 50 wt% of the hard constituents are WC grains. The hard constituents can also comprise nitrides, carbides or carbonitrides of one or more of Ta, Ti, Nb, Cr, Hf, V, Mo and Zr, such as TiN, TiC and/or TiCN.

The particle size distribution is herein represented by D10, D50 and D90 values. The D50, the median, is defined as the particle diameter where half of the population has a size smaller than this value. Similarly, 90 percent of the distribution is smaller than the D90 value, and 10 percent of the population is smaller than the D10 value. The population is generally represented by its volume fraction.

By "organic binder" is herein meant organic polymers added to a slurry before spray drying to enhance cohesivity of resulting granules.

By "liquid binder" is herein meant solutions of components that bind together powder particles. In a binder jet process, a liquid binder is selectively deposited on a powder bed, forming the green body.

Detailed description of the invention

A method of making a cemented carbide body comprising the following steps:

- providing a ready-to-print cemented carbide powder,
- providing a liquid binder,
- 3D printing a body from the ready-to-print cemented carbide powder and the liquid binder, thereby forming a green body,
- curing the green body,
- sintering the green body to form a cemented carbide body,

**characterized in that** the liquid binder further comprises a tungsten containing salt.

The ability to control the carbon content in cemented carbides made by 3D printing have several advantages. The exact carbon content in a sintered cemented carbide depends on actual application for the cemented carbide. Since there is a desire for many cemented carbide components to avoid eta phase and free graphite, this has limited the possibilities to have lower metal binder content since the two phase region, or the three phase region in gamma phase containing cemented carbides i.e. where there is no eta phase or free graphite, in the phase diagram will be too narrow at lower metal binder contents. At a higher metal binder content, the two/three phase region is much wider and allows for a larger variation in carbon content without eta phase or free graphite in the microstructure.

The method according to the present invention makes it possible to control the carbon content in cemented carbides made by 3D printing. By adding the tungsten through the liquid binder, and the tungsten is evenly distributed throughout the printed body. The carbon content and sinterability in the printed powder can, by adding W to the liquid binder, be adjusted with a carbon control at a 0.001 % level to reach the desired final composition and thereby also the desired microstructure after 3D printing and sintering. In addition, the sinterability with regards to sintered density increases.

The liquid binder can be any binder suitable for additively manufacturing cemented carbides, that has sufficient solubility for the tungsten containing salt. The main green strength yielding components in the liquid binder generally works in one of two ways. Either, the liquid binder contains long chain polymers that entangle upon evaporation of the solvent, thereby yielding green strength, or, they function by chemical reaction after the binder has been deposited on the powder bed. Both types of liquid binders can be used according to the present invention.

The tungsten containing salt is added to the liquid binder prior to the printing process.

In one embodiment of the present invention, the liquid binder is water based. By that is herein meant that the solvent in the liquid binder is water.

The tungsten containing salt is preferably a tungstate, preferably ammonium metatungstate (AMT) which can be written as $(NH_4)_6 H_2W_{12}O_{40} nH_2O$. AMT is especially suitable due to its high solubility in water. AMT will disintegrate to $WO_3$ if heated.

In one embodiment of the present invention, the tungsten containing salt is completely dissolved in the liquid binder.

In one embodiment of the present invention, a fraction of the tungsten containing salt is present in the liquid binder as solid particles thus forming a suspension.

The amount of tungsten containing salt dissolved in the binder depends on several things. First of all, the amount of tungsten containing salt added to the 3D printing process is dependent on the degree of carbon adjustment that is required. Then, depending on the amount of liquid binder that is required for printing a specific green body with a specific 3D printing process, the correct amount of tungsten containing salt is added to the liquid binder.

The amount of W added to the final cemented carbide through the tungsten containing salt is only to adjust the carbon balance in the cemented carbide, not to be the main W source. The amount of W added through the tungsten containing salt is not more than 5 wt% of the total amount of W in the final cemented carbide. The remaining W is from the WC in the sintered cemented carbide granules.

By "ready-to-print cemented carbide powder" is herein meant a powder suitable for 3D printing comprising cemented carbide particles. The ready-to-print cemented carbide powder used according to the present invention comprises sintered particles. By sintered cemented carbide particles is herein meant that the powder has been sintered, such as using solid state sintering and/or liquid phase sintering. The particles are preferably spherical with good flowability.

The ready-to-print cemented carbide powder preferably comprises a relatively low fraction of fine particles.

The D90 of the particles in the ready-to-print cemented carbide powder is between 15 and 40 $\mu$m, preferably between 17 and 35 $\mu$m, more preferably between 27 and 33 $\mu$m. This is advantageous in that it provides a powder with good flowability during printing and decreases the risk for problems related to metallic binder phase enriched zones after using a high pressure sintering step (HIP). Too large particles tend to contribute to the formation of metallic binder phase enriched zones in the sintered cemented carbide body.

In one embodiment of the present invention the D50 of the cemented carbide particles is between 5 and 35 $\mu$m, preferably between 10 and 30 $\mu$m, more preferably between 15 and 25 $\mu$m, most preferably between 17 and 21 $\mu$m.

In one embodiment of the present invention the D10 of the cemented carbide particles is between 1 and 25 $\mu$m, preferably between 5 and 15 $\mu$m, more preferably between 5 and 10 $\mu$m.

In one embodiment of the present invention, the ready-to-print cemented carbide powder comprises between 10 and 70 vol%, preferably between 10 and 25 vol%, preferably between 13 and 20 vol%, particles with a diameter < 10 $\mu$m. If the fine fraction is larger, the flowability of the powder will be impaired, which often cause problems with the spreading of defect free layers during the printing process.

In one embodiment, the ready-to-print cemented carbide powder has been pre-sintered so that the porosity of the cemented carbide particles is between 0 and 40 % porosity, preferably between 0 and 10 vol%, or between 0 and 5 vol%, or that the particles are fully dense.

The porosity contributes to the sintering activity during the sintering of the printed green body and depending on how much sintering activity that is desired for a particular cemented carbide composition, the porosity can be adjusted. The porosity can for example be measured using image analysis in a LOM image at 1000x magnification.

In one embodiment of the present invention, the ready-to-print cemented carbide powder is made by:

- mixing a raw powder comprising WC and powders forming metal binder with an organic binder and a liquid to form a slurry
- spray drying said slurry and thereby form a granulated raw powder
- sintering said spray dried granulated raw powder removing said organic binder and thereby forming a sintered ready-to-print- cemented carbide powder.

In one embodiment of the present invention the spray dried powder is sieved before the sintering step, preferably sieved to remove particles larger than 42 $\mu$m in diameter. This is advantageous in that it reduces the risk of problems with very large particles in the powder.

The ready-to-print cemented carbide powder comprise a metallic binder phase wherein the average content of metallic binder phase in the powder is between 5 and 14 wt%, preferably between 10 and 14 wt%. A metallic binder phase content within this range is advantageous in that the density of pores in the sintered cemented carbide body may be very limited and still the body can gain from the hardness and toughness that is characteristic for a cemented carbide body. It is usually easier to produce a pore free body with a higher content of metallic binder phase since it is this phase that is melting during liquid phase sintering.

The metallic binder phase in the ready-to-print cemented carbide powder is a metal or a metallic alloy, and the metal can for example be selected from Cr, Mo, Fe, Co or Ni alone or in any combination. Preferably the metallic binder phase comprises a combination of Co, Ni and Fe, a combination of Co and Ni, or only Co. Other elements e.g. W from the WC, will be present in the metal binder since they are inevitably dissolved in the metal binder during sintering. If other common additives, such as cubic carbides etc. are added, elements such as Ti, Nb, Ta, V etc. can also be found on the metal binder.

In one embodiment of the present invention the cemented carbide particles can also comprise other constituents common in the art of making cemented carbides. Examples of such constituents are carbides, nitrides or carbonitrides of one or more elements selected from Ti, Ta, Nb, Cr and V.

The average WC grain size in the ready-to-print cemented carbide powder is between 0.5 to 5 $\mu$m or between 0.5 and 2 $\mu$m.

In one embodiment of the present invention the ready-to-print powder comprises cemented carbide particles comprising a Co binder phase in an amount of between 5 and 14 wt%.

In one embodiment of the present invention the three-dimensional (3D) printing is binder jetting. Binder jetting is advantageous in that it is a relatively cheap three-dimensional printing method. For cemented carbide component manufacturing it is advantageous since no melting of the material occurs in the printer. The consolidation is entirely carried out in a subsequent sintering step in a sintering furnace. The exact parameters for the printing process depends on several things and has to be decided upon by the person skilled in the art. Parameters such as type of component to be printed, printing equipment, type of liquid binder etc. will affect printing parameters such as individual layer thickness, amount of liquid binder used, printing speed etc.

In one embodiment of the present invention the method further comprises, subsequent to 3D printing and before sintering, the steps of:

- curing the 3D printed body at 150-230°C, and

- de-powdering the 3D printed body to remove loose particles from the surfaces of the body.

Curing is normally performed after the printing step. The printing binder is cured whereby the green body gets sufficient strength to be handled further. The curing can be performed by subjecting the printed green body to an increased temperature, such as 150-250 °C before removal of the excessive powder. In one embodiment the curing is performed in a non-oxidation environment such as in a flowing gas of Ar and/or $N_2$ or in vacuum.

The three dimensional printing of a cemented carbide body may result in a body of any shape suitable for its purpose.

In one embodiment of the present invention the 3D printed body is a cutting tool for metal cutting such as an insert, a drill or an end mill.

In one embodiment of the present invention the 3D printed body is a cutting tool for a mining application such as a drill bit, or a wear part.

The printed bodies are subsequently sintered according to any conventional sintering methods e.g. vacuum sintering, Sinter HIP, spark plasma sintering, gas pressure sintering (GPS) etc.

In one embodiment of the present invention, the sintering temperature is between 1350 and 1550°C.

In one embodiment of the present invention, the sintering process comprises a sinter HIP step performed at a temperature of between 1350 and 1550°C, and a pressure of at least 40 Bar, preferably between 40 and 80 Bar.

EXAMPLE 1

Manufacturing of the ready-to-print cemented carbide powder

WC powder with an average particles size of 0.8 $\mu$m, $Cr_3C_2$ and Co powder was mixed with a water/ethanol solution to form a slurry. An organic binder (PEG) was also added in an amount of 4 wt%. The aimed final composition was 10 wt% Co, 0.43 wt% Cr and balance WC (PEG not included). As a next step spray drying of said raw powder was performed forming spherical granules. The spray dried granules were sieved to remove granules larger than 63 $\mu$m in diameter.

The spray dried granules were coated with graphite powder to avoid being bonded to each other during sintering. The spray dried granules were then sintered to remove the PEG and to consolidate the granules. The sintering was performed in vacuum, at 1350°C for 90 minutes. Two sets of powders having different total carbon content were made. The difference in carbon was achieved removing different amounts of the graphite that was added prior to sintering. The composition of the powders is shown in Table 1.

Table 1

| Powder | Co (wt%) | Cr (wt%) | Ctot (wt%) | WC |
|--------|----------|----------|------------|---------|
| A | 10 | 0.43 | 5.54 | balance |
| B | 10 | 0.43 | 5.85 | balance |

The particle size distribution (D10, D50 and D90) and the fraction of the particles with a diameter < 10$\mu$m were analyzed with Sympatec HELOS/BR Particle size analysis with laser diffraction and RHODOS dry dispersing system using R3 measurement range. The results are presented in Table 1.

Table 2

| Powder | D10 ($\mu$m) | D50 ($\mu$m) | D90 ($\mu$m) |
|--------|--------------|--------------|--------------|
| A | 9.6 | 18.7 | 33.6 |
| B | 7.6 | 14.0 | 24.0 |

Water based printing binder Exxon AquaFuse was used as liquid binder. 1 kg of AMT was added to 1 L of the binder, and was stirred during a period of 120 minutes at 80°C. The solution was then cooled to room temperature. Any remaining AMT was removed by decantation and the solution was then filtered (0.8 mesh filter). The liquid binder was then prepared having different fractions of AMT containing solution, see Table 3.

Table 3

| | Powder type | Binder vol% AMT containing fraction | Density (g/ml) of binder blend used |
|--|-------------|-------------------------------------|-------------------------------------|
| Invention 1 | A | 12.5 | n.a. |
| Invention 2 | A | 25 | 1.1098 |
| Comparative 1 | A | 0 | 1.0351 |
| Invention 3 | B | 12.5 | n.a. |
| Invention 4 | B | 25 | 1.1098 |
| Invention 5 | B | 50 | 1.1861 |
| Invention 6 | B | 100 | 1.3340 |
| Comparative 2 | B | 0 | 1.0351 |

The powders were mixed with the liquid binder having different amounts of AMT containing fraction according to Table 3. The proportions were so that 3 g liquid binder were added to 40 g of powder. The mixture was then dried at 80°C for 170min and crushed afterwards with petal and mortar.

Green bodies were formed from the binder-powder mix and the green bodies were then pressed with a hydraulic press to form discs. Each disc contained 6g or binder-powder mix. A pressure of 2 ton was used and the diameter of each disc was 15.6mm diameter.

The green bodies were subsequently sintered in a sintering process.

The sintering was done on Y-coated graphite trays in a graphite lined sintering furnace. First, the bodies were subjected to a debinding step where the temperature was increased from room temperature up to 450°C in a sintering chamber with flowing $H_2$. This was followed by a vacuum step where the temperature was increased from 450°C to 1380°C and kept isothermal for 45 minutes thereafter increasing the temperature to 1410°C where it was held for 40 minutes. After the liquid phase sintering step, the samples were subjected to a high pressure step, where Ar was introduced into the chamber during 13 minutes to reach the pressure of 55 bar, and thereafter holding this pressure for 20 minutes. The chamber was thereafter cooled down and the samples were removed from the chamber.

The sintered samples were analyzed with regard to chemical composition, density and magnetic properties. The results are presented in Table 4.

The Co, Cr, W and C content in the sintered pieces were analyzed using standard chemical analysis, XRF for Co and Cr, LECO for total carbon whereas the W content is calculated as the remaining element. The results can be seen in Table 4.

The weight and the magnetic saturation were measured using a Foerster Koerzimat 1.097 MS instrument. From these values Com, which is the weight specific magnetic saturation of the sample relative to the weight specific magnetic saturation of pure Co, is calculated according to equation (1)

$$Com = (\text{measured magnetic moment (Vsm)}/\text{measured sample weight (kg)})/(201*10^{-6} Tm^3/kg)*100$$

For Cr containing samples the correction formula $Com_{corr} = Com + 1.13*w\%Cr$ is applied to compensate for the reduction in the magnetic saturation of Co by Cr.

When using element like Ni and iron that reduce or increase the magnetic saturation the person skilled in the art has to compensate for this, or use chemical analysis to monitoring the carbon content.

Table 4

|  | Density (g/cm³) | Com | Com$_{corr}$ | Co$_{corr}$/(wt% Co+wt %Cr) | Co (wt%) | Cr (wt%) | C$_{tot}$ (wt%) | W (wt%) |
|---|---|---|---|---|---|---|---|---|
| Invention 1 | 14.41 | 8.377 | 8.840 | 0.84 | 10.1 | 0.41 | 5.45 | 84.04 |
| Invention 2 | 14.35 | 4.776 | 5.239 | 0.50 | 10.1 | 0.41 | 5.41 | 84.08 |
| Comparative 1 | 14.42 | 8.780 | 9.243 | 0.88 | 10.1 | 0.41 | 5.47 | 84.02 |
| Invention 3 | 14.16 | 9.398 | 9.884 | 0.93 | 10.2 | 0.43 | 5.77 | 83.6 |
| Invention 4 | 14.21 | 9.416 | 9.902 | 0.93 | 10.2 | 0.43 | 5.72 | 83.65 |
| Invention 5 | 14.30 | 9.389 | 9.864 | 0.93 | 10.2 | 0.42 | 5.63 | 83.75 |
| Invention 6 | 14.40 | 9.266 | 9.741 | 0.94 | 9.98 | 0.42 | 5.53 | 84.0 |
| Comparative 2 | 14.12 | 9.424 | 9.910 | 0.93 | 10.2 | 0.43 | 5.77 | 83.6 |

In Table 4, it can be seen that the total carbon content and the tungsten content can carefully be controlled by adding tungsten to the liquid binder.

While the invention has been described in connection with the various exemplary embodiments, it is to be understood that the invention is not limited to the disclosed exemplary embodiments; on the contrary, it is intended to cover various modifications and equivalent arrangements within the scope of the appended claims.

**Claims**

1. A method of making a cemented carbide body comprising the following steps:

   - providing a ready-to-print cemented carbide powder,

- providing a liquid binder,
- 3D printing a body from the ready-to-print cemented carbide powder and the liquid binder, thereby forming a green body,
- curing the green body,
- sintering the green body to form a cemented carbide body,

**characterized in that** the liquid binder comprises a tungsten containing salt.

2. A method according to claim 1 wherein the tungsten containing salt is ammonium metatungstate (AMT).

3. A method according to any of the preceding claims wherein the tungsten containing salt is completely dissolved in the liquid binder.

4. A method according to any of the preceding claims wherein the 3D printing is performed using binder jetting.

5. A method according to any of the preceding claims wherein the ready-to-print cemented carbide powder comprises sintered cemented carbide particles.

6. A method according to any of the preceding claims wherein the ready-to-print cemented carbide powder have a D50 between 5 and 35 $\mu$m.

7. A method according to any of the preceding claims wherein the metal binder in the ready-to-print cemented carbide powder is between 4 and 14 wt%.

8. A method according to any of the preceding claims wherein the metal binder in the ready-to-print cemented carbide powder is selected from the elements Cr, Mo, Fe, Co or Ni alone or in any combination.

9. A method according to any of the preceding claims wherein the metal binder in the ready-to-print cemented carbide powder is Co.

Europäisches
Patentamt

European
Patent Office

Office européen
des brevets

# EUROPEAN SEARCH REPORT

**Application Number**

EP 24 16 0153

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2018/236687 A1 (PRICHARD PAUL D [US] ET AL) 23 August 2018 (2018-08-23) * claims 14, 15, 30 * * paragraph [0025]; example 1 * * paragraph [0026]; example 2 * * paragraphs [0017], [0021] * * table IV * | 1-9 | INV. C22C29/08 B22F1/105 B22F10/14 B33Y10/00 B33Y70/10 C22C1/051 C22C29/06 |
| Y | US 2020/346365 A1 (WANG ZHUQING [US] ET AL) 5 November 2020 (2020-11-05) * claims 24, 30, 31 * * paragraphs [0024], [0034] - [0040] * * table IV * | 1-9 | ADD. B22F5/00 B33Y80/00 C22C1/053 |
| Y | US 2021/331242 A1 (BARBATI ALEXANDER [US] ET AL) 28 October 2021 (2021-10-28) * claims 181, 182, 184, 185 * * paragraphs [0027], [0028], [0055], [0178], [0179], [0197] * | 1-9 | |
| Y | US 2019/388966 A1 (GIBSON MICHAEL ANDREW [US] ET AL) 26 December 2019 (2019-12-26) * claim 1 * * paragraphs [0075], [0078], [0079] * | 1-9 | TECHNICAL FIELDS SEARCHED (IPC) B22F B33Y C22C |

The present search report has been drawn up for all claims

| Place of search | Date of completion of the search | Examiner |
|---|---|---|
| The Hague | 28 June 2024 | Traon, Nicolas |

EPO FORM 1503 03.82 (P04C01)

**EP 4 610 376 A1**

## ANNEX TO THE EUROPEAN SEARCH REPORT
## ON EUROPEAN PATENT APPLICATION NO.

EP 24 16 0153

This annex lists the patent family members relating to the patent documents cited in the above-mentioned European search report.
The members are as contained in the European Patent Office EDP file on
The European Patent Office is in no way liable for these particulars which are merely given for the purpose of information.

28-06-2024

| Patent document cited in search report | | Publication date | Patent family member(s) | | Publication date |
|---|---|---|---|---|---|
| US 2018236687 | A1 | 23-08-2018 | AT | 521303 A2 | 15-12-2019 |
| | | | CN | 110199043 A | 03-09-2019 |
| | | | DE | 112018000911 T5 | 07-11-2019 |
| | | | ES | 2732648 A2 | 25-11-2019 |
| | | | GB | 2573445 A | 06-11-2019 |
| | | | JP | 2020513214 A | 07-05-2020 |
| | | | KR | 20190111027 A | 01-10-2019 |
| | | | KR | 20230150889 A | 31-10-2023 |
| | | | SE | 1950947 A1 | 20-08-2019 |
| | | | US | 2018236687 A1 | 23-08-2018 |
| | | | WO | 2018152448 A1 | 23-08-2018 |
| US 2020346365 | A1 | 05-11-2020 | CN | 111876642 A | 03-11-2020 |
| | | | DE | 102020109047 A1 | 05-11-2020 |
| | | | US | 2020346365 A1 | 05-11-2020 |
| US 2021331242 | A1 | 28-10-2021 | US | 2019111480 A1 | 18-04-2019 |
| | | | US | 2021331242 A1 | 28-10-2021 |
| | | | WO | 2019079497 A1 | 25-04-2019 |
| US 2019388966 | A1 | 26-12-2019 | NONE | | |

EPO FORM P0459

For more details about this annex : see Official Journal of the European Patent Office, No. 12/82